# EUROPEAN PATENT APPLICATION

(11) **EP 2 827 270 A1**
(43) Date of publication of application: **21.01.2015**
(21) Application number: 13760506.9
(22) Date of filing: 29.01.2013
(51) Int. Cl.: G06F 21/44, G06F 21/12

(54) **PORTABLE INFORMATION TERMINAL AND PROGRAM**

(30) Priority: 15.03.2012 JP 2012058775
(71) Applicant: Hitachi Solutions, Ltd., Tokyo 140-0002 (JP)
(72) Inventor: YADA Tomoki, Tokyo 140-0002 (JP)
(74) Representative: Liesegang, Eva
(86) International application number: PCT/JP2013/051840
(87) International publication number: WO 2013/136862

(57) **Abstract**

The present invention permits only reliable applications to change the configuration information of a portable information terminal. To this end, the portable information terminal is provided with a ROM area that stores (1) a first inter-process communication function unit that partially constitutes a first administrative application having an administrative privilege and is capable of transmitting information to and from other applications, (2) an authentication application name that partially constitutes the first administrative application and is used to authenticate an application that is a source of transmission of information, and an application name, a shared name, and a signature of a second administrative application having no administrative privilege; and (3) a RAM area that stores an application name, a shared name, and an ID of an installed application and is managed via an OS. The first inter-process communication function unit authenticates an application, which is the source of transmission of the information, using a shared name corresponding to the ID of the application and the authentication application name.

## Description

### Technical Field

The present invention relates to a technology for authenticating application programs that are to operate on a portable information terminal.

### Background Art

In recent years, portable information terminals typified by smartphones or tablet terminals have come into widespread use. In response, there has been an increasing need for portable information terminals to be utilized for business. Typically, when a company considers using portable information terminals for its business, the company provides portable information terminals to employees, and an information manager of the company manages such portable information terminals.

In this case, settings of all of the portable information terminals provided to the employees are desirably managed based on the policy determined by the company. Examples of the settings include various settings such as VPN (Virtual Private Network) connection and version upgrade of application programs.

One of the characteristics of an OS (Operating System) mounted on a portable information terminal is a sandbox mechanism. The sandbox mechanism is characterized by not permitting communication between individual application programs in principle. That is, the sandbox mechanism prohibits access to data created by a given application program from other application programs in principle. Meanwhile, the sandbox mechanism permits application programs to operate with a general user authority on the OS and not operate with other privileges in principle.

In such a circumstance, the information manager of the company is unable to perform setting on an application, which requires a privilege, on the portable information terminal provided to each employee. Consequently, a problem would arise that the security policy determined by the company would not always be able to be applied to the portable information terminal.

### Citation List

### Non Patent Literature

Non Patent Literature 1: Secure interprocess communication: http://cr.yp.to/docs/secureipc.html

### Summary of Invention

### Technical Problem

As a method for solving the aforementioned problem, a method for causing a configuration changing application program, which operates with a privilege, to operate on a portable information terminal in advance is considered. In such a case, an instruction from a configuration requesting application program prepared by the company is transmitted to the configuration changing application through inter-process communication, so that the configuration changing application, upon receiving the instruction, executes a setting process in accordance with the instruction.

However, with such a method, it would be impossible to check the reliability of the configuration requesting application program with the configuration changing application program. Therefore, if the source of transmission of the instruction is a malicious application program, there is a possibility that a configuration that is not intended by the information manager of the company may be applied to the portable information terminal.

Non Patent Literature 1 discloses a technology for, during inter-process communication, identifying the UID (User ID) of an application program that is the source of transmission of information. However, the UID of an application program to operate on a portable information terminal is determined when the application program is installed on the portable information terminal. Thus, even an identical application program to operate may have a different UID depending on a portable information terminal on which the application program is installed. Therefore, it would be impossible to determine if an application program is a malicious application program only by determining the presence or absence of a particular UID. In addition, according to the method of Non Patent Literature 1, it would be only possible to acquire the UID of an application program that is the source of transmission of information, on the configuration changing application that operates with a privilege.

As described above, with the current technology, it would be impossible to determine if an application program, which is the source of transmission of information, is the configuration requesting application program prepared by the company.

The present invention has been made in view of the foregoing technical problems, and provides an authentication technology that can, even when the UID of an application program differs depending on a portable information terminal on which the application program is installed, surely authenticate if the application program that is the source of transmission of information is reliable, on the configuration changing application program that operates with a privilege.

### Solution to Problem

In order to solve the aforementioned technical problems, a portable information terminal in accordance with the present invention includes a ROM area that stores (1) a first inter-process communication function unit that partially constitutes a first administrative application program having an administrative privilege and is capable of transmitting information to and from other application programs, (2) an authentication application name that partially constitutes the first administrative application and is used to authenticate an application program that is a source of transmission of information, (3) a second administrative application program having no administrative privilege, and (4) an application name, a shared name, and a signature of the second administrative application program; and a RAM area that stores an application name, a shared name, and an ID of an installed application program and is managed via an OS (Operation System). The first inter-process communication function unit, after acquiring an ID of an application program that is a source of transmission of information, acquires a shared name corresponding to the acquired ID from the RAM area, and if the shared name has been successfully acquired, further compares the shared name with the authentication application name, and if the shared name matches the authentication application name, determines that the application program that is the source of transmission is reliable.

### Advantageous Effects of Invention

According to the present invention, it is possible to, even when the ID of an application program having no administrative privilege differs depending on a portable information terminal, surely authenticate the reliability of the application program that is the source of transmission of information, on an administrative application program having an administrative privilege. Other problems, configurations, and advantageous effects will become apparent from the following description of embodiments.

### Brief Description of Drawings

Fig. 1 is a view showing the conceptual configuration of a network system in accordance with Embodiment 1.
Fig. 2 is a view showing the functional configuration of a portable information terminal in accordance with Embodiment 1.
Fig. 3 is a view showing the conceptual structure of application-specific information.
Fig. 4 is a view showing the conceptual structure of application management information.
Fig. 5 is a view showing the functional configuration of a management server in accordance with Embodiment 1.
Fig. 6 is a flowchart showing the procedures to apply configuration information in accordance with Embodiment 1.
Fig. 7 is a flowchart showing the procedures to authenticate an application in accordance with Embodiment 1.
Fig. 8 is a view showing another functional configuration of a portable information terminal in accordance with Embodiment 2.

### Description of Embodiments

Hereinafter, embodiments of the present invention will be described with reference to the drawings. It should be noted that the embodiments of the present invention are not limited to those described below, and a variety of variations are possible within the technical spirit and scope of the invention.

### [Embodiment 1]

### [System Configuration]

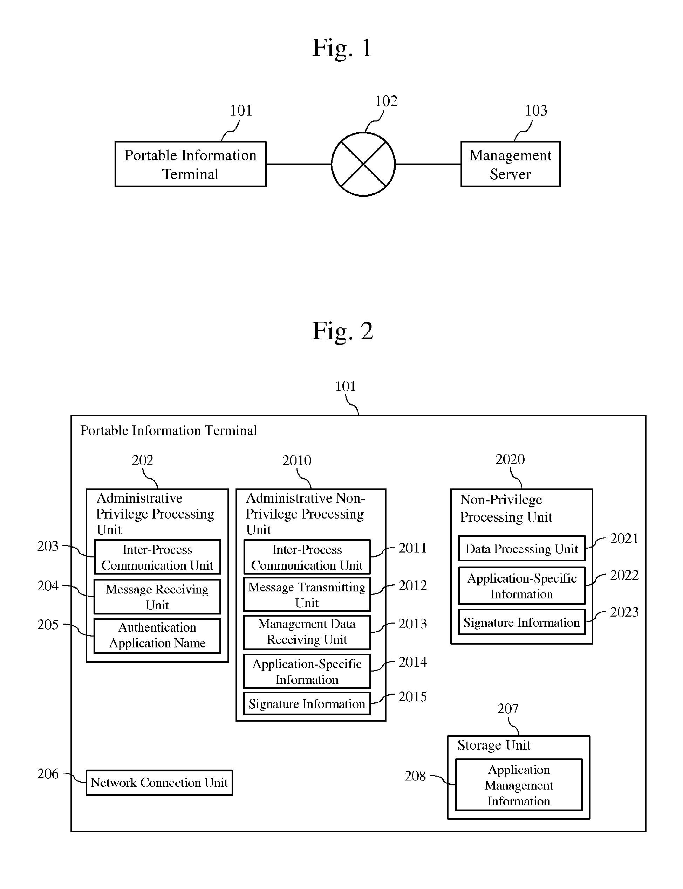

Fig. 1 shows the conceptual configuration of a network system in accordance with this embodiment. A portable information terminal 101 is mutually connected to a management server 103 via a network 102. It is acceptable as long as the network 102 is able to transmit information, and the connection configuration thereof may be any configuration. The network 102 is configured with one or both of wired connection and wireless connection. Although Fig. 1 shows one portable information terminal 101 and one management server 103, the number of such components may be any number. In this embodiment, it is supposed that the portable information terminal 101 is a terminal device that is provided to an employee by a company. It is also supposed that the management server 103 is a server device of the company that manages the provided portable information terminal 101.

Hereinafter, a case is supposed where the management server 103 issues an instruction to the portable information terminal 101 to change the configuration information on the terminal. The configuration information corresponds to, for example, VPN connection settings of the terminal, settings of a list of application programs that can be installed on the terminal, and an instruction to upgrade the version of an application program. Needless to say, such configuration information is only exemplary, and thus is not limited to the content of this embodiment.

### [Configuration of the Portable Information Terminal 101]

Fig. 2 shows the functional block configuration of the portable information terminal 101 in accordance with this embodiment. The portable information terminal 101 includes an administrative privilege processing unit 202, a network connection unit 206, and an administrative non-privilege processing unit 2010, a non-privilege processing unit 2020, and a storage unit 207. Each unit shown in Fig. 2 may be configured as hardware or implemented as a function on software. In addition, the number of each of the administrative privilege processing units 202, the administrative non-privilege processing units 2010, and the non-privilege processing unit 2020 may be any number. It should be noted that the non-privilege processing unit 2020 is an application program that can be installed by the user of the portable information terminal 101 or the information manager.

### [Prerequisite]

In this embodiment, the administrative privilege processing unit 202 operates as a program having an administrative privilege. The phrase: "having an administrative privilege" means "having the authority of the administrator." For example, in Linux (Registered Trademark), it means a program that operates with the root privilege, that is, a program that operates with a zero UID (User ID).

Each of the administrative non-privilege processing unit 2010 and the non-privilege processing unit 2020 operates as a program with no privilege. The term "non-privilege" means "having no administrative privilege." For example, in Linux (Registered Trademark), it means a program with non-root privilege, that is, a program that operates with a non-zero UID.

The administrative privilege processing unit 202 and the administrative non-privilege processing unit 2010 are stored in the ROM area (not shown) of the portable information terminal 101. Thus, the user of the portable information terminal 101 is unable to freely change the processes of such units. It should be noted that the non-privilege processing unit 2020 and the storage unit 207 are stored in the RAM area (not shown) of the portable information terminal 101.

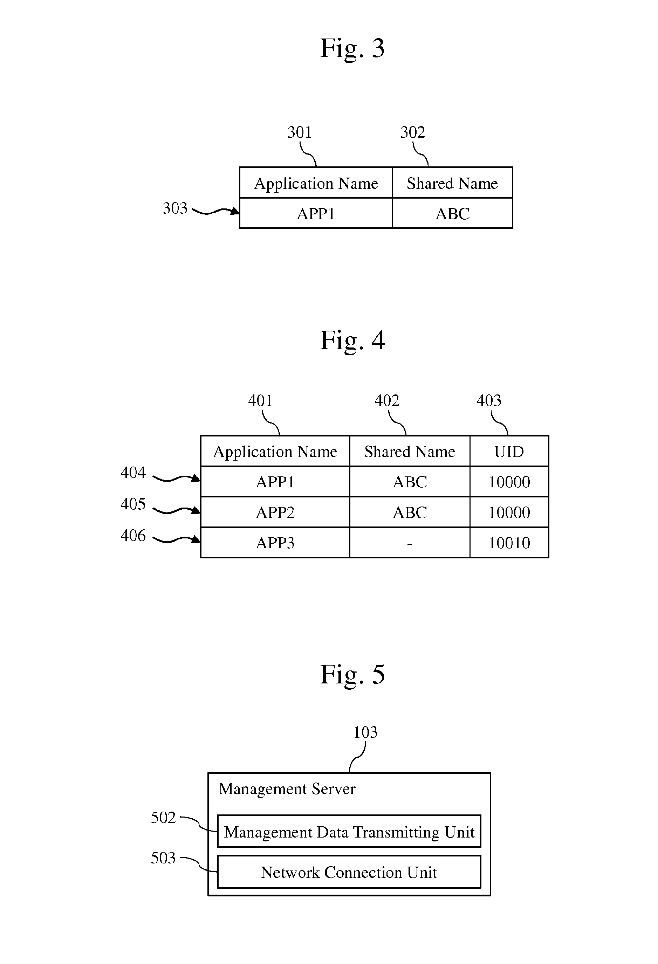

Each of the administrative privilege processing unit 202, the administrative non-privilege processing unit 2010, and the non-privilege processing unit 2020 has assigned thereto an ID that differs from program to program. For example, in Linux (Registered Trademark), the ID corresponds to the UID. When signature information (2015, 2023) are programs that have been created using the same key, and application-specific information (2014, 2022) have the same shared name 302 (Fig. 3), the same UID is assigned to the application programs. That is, a plurality of programs, which have the same shared name but have signature information that have been created using different keys, cannot have an identical UID.

In addition, in a circumstance in which an application program having a shared name has been installed, it would be impossible to install another application program whose shared name is the same as that of the already installed application program and whose signature information has been created using a different key. That is, a plurality of programs/applications whose shared names are the same and whose signature information have been created using the same key have the same UID. Conversely, if a plurality of programs/applications have the same UID, such programs/applications have the same shared name and have signature information that have been crated using the same key.

In this embodiment, the portable information terminal 101 is assumed to be a smartphone or a tablet terminal, for example. In such a case, the portable information terminal 101 has a computer, a communication module, a flat display, and the like as the basic components. Needless to say, the portable information terminal 101 is not limited to such terminals, and includes a laptop computer terminal or a dedicated portable terminal. The portable information terminal 101 also has mounted thereon devices that are typical of this type of terminal as needed, though not shown. For example, the portable information terminal 101 has mounted thereon a CPU, memory, flash ROM, an input instruction device (i.e., touch panel), a GPS (Global Positioning System) receiving device, a wireless communication device that complies with Wi-Fi (Registered Trademark), and the like.

The network connection unit 206 is a device for connecting the portable information terminal 101 to the network 102, and corresponds to, for example, a wireless LAN (Local Area Network) device or a 3G (i.e., third generation mobile communication system) wireless device. It should be noted that the number of the network connection units 206 may be any number.

### [Configuration of the Administrative Privilege Processing Unit 202 of the Portable Information Terminal 101]

The administrative privilege processing unit 202 has an inter-process communication unit 203, a message receiving unit 204, and an authentication application name 205.

The inter-process communication unit 203 executes inter-program communication to allow information exchange between the administrative privilege processing unit 202 and the administrative non-privilege processing unit 2010. The inter-process communication unit 203 on the side of a program that is the target of exchange of information executes a process of acquiring the UID of a program that is the source of exchange of the information, or a process of creating a data transmission/reception path for exchanging authentication or configuration information. For example, in the case of Linux (registered trademark), the inter-process communication corresponds to UNIX (Registered Trademark) domain socket communication. Examples of a method for acquiring the UID of a program that is the source of exchange of information include passing SO_PEERCRED as an argument to the getsockopt function.

The message receiving unit 204 executes a process in accordance with information received via the inter-process communication unit 203. The content of such process depends on the information received. Thus, in this embodiment, the content of the process is not defined, but corresponds to a process that requires a privilege such as, for example, changing the VPN connection settings and the like.

The authentication application name 205 is an application name used to identify the administrative non-privilege processing unit 2010 or the non-privilege processing unit 2020. A method of using the authentication application name 205 is described below. Herein, it is acceptable as long as the authentication application name 205 is stored in a data area that cannot be changed by the administrative non-privilege processing unit 2010 or the non-privilege processing unit 2020. Thus, the storage location of the authentication application name 205 is not defined. For example, if the authentication application name 205 is stored as a file, it is acceptable as long as the content of the file is prevented from being changed by the administrative non-privilege processing unit 2010 or the non-privilege processing unit 2020 by setting permissions on the file. In this specification, a data area in which data cannot be changed, inclusive of a case where permissions on the file are set, is called a ROM area.

The administrative privilege processing unit 202 is started when the portable information terminal 101 is started, for example, and enters a standby state to perform inter-process communication with other application programs. However, the timing at which the administrative privilege processing unit 202 is started is not defined herein.

### [Configuration of the Administrative Non-Privilege Processing Unit 202 of the Portable Information Terminal 101]

The administrative non-privilege processing unit 2010 includes an inter-process communication unit 2011, a message transmitting unit 2012, a management data receiving unit 2013, an application-specific information 2014, and signature information 2015.

The inter-process communication unit 2011 executes inter-program communication to allow information exchange between the administrative privilege processing unit 202 and the administrative non-privilege processing unit 2010. The content of the communication is the same as that of the aforementioned inter-process communication unit 203.

The management data receiving unit 2013 provides a function of receiving information transmitted from a management data transmitting unit 302 of the management server 103 and passing the information to the message transmitting unit 2012. That is, the management data receiving unit 2013 is used for data transmission to and from external application programs. The message transmitting unit 2012, upon receiving the information, passes the information to the inter-process communication unit 2011.

The signature information 2015 means information on an electronic signature on the inter-process communication unit 2011 to the application-specific information 2014. It should be noted that an algorithm for the electronic signature is not limited in this embodiment.

The application-specific information 2014 is information that characterizes application programs included in the administrative non-privilege processing unit 2010. Fig. 3 shows a detailed example 303 of the application-specific information 2014. The application-specific information 2014 includes an application name 301 and a shared name 302. It should be noted that the application-specific information 2014 may include any items other than such two items.

The application name 301 is a character string that represents the name of an application. The shared name 302 is a character string that can be freely set, and is set when an application is desired to be operated with the same ID as that of another application. When the shared name 302 is not set or when the shared name 302 differs from those of other applications, the relevant application program is provided with a different ID from those of the other application programs.

In the case of the detailed example 303, "APP1" is set as the application name 301, and "ABC" is set as the shared name 302.

### [Configuration of the Non-Privilege Processing Unit 2020 of the Portable Information Terminal 101]

The non-privilege processing unit 2020 includes a data processing unit 2021, an application-specific information 2022, and signature information 2023.

The content of the process of the data processing unit 2021 is not particularly defined in this embodiment. As each of the application-specific information 2022 and the signature information 2023, appropriate information is set. It should be noted that the application-specific information 2022 is information that characterizes application programs included in the non-privilege processing unit 2020. The signature information 2023 means information on an electronic signature on the data processing unit 2021 to the application-specific information 2022. It should be noted that an algorithm for the electronic signature is not limited in this embodiment.

### [Configuration of the Storage Unit 207 of the Portable Information Terminal 101]

The storage unit 207 includes application management information 208. The storage unit 207 is prepared as an area in which data is rewritable. The application management information 208 is managed by the OS, and the content of the application management information 208 cannot be changed by application programs. Fig. 4 shows a detailed example of the application management information 208. The application management information 208 includes an application name 401, a shared name 402, and UID 403. It should be noted that the storage unit 207 may also store information other than the application management information 208.

### [Method for Creating the Application Management Information 208]

The application management information 208 is created or changed with the function of the OS when an application program is installed on the portable information terminal 101.

For example, when an application program having the application-specific information 2014 with the data structure shown in Fig. 3 is installed on the portable information terminal 101, the OS assigns UID to the application program to be installed in accordance with the procedures described below, and stores the application management information 208, which is a combination of the assigned UID and the application-specific information 2014, into the storage unit 207.

Fig. 4 shows detailed examples 404 to 406 of the application management information 208.

The detailed example 404 corresponds to a case where an application program having the application-specific information 2014 in which the application name 301 is "APP1" and the shared name 302 is "ABC" is installed on the portable information terminal 101. In this case, "10000" is assigned by the OS as the UID of the application program when it is installed. Consequently, the detailed example 404 having the application name 401 of "APP1," the shared name 402 of "ABC," and the UID 403 of "10000" is created.

A detailed example 405 corresponds to a case where an application program having application-specific information 2022 in which the application name 301 is "APP2" and the shared name 302 is "ABC" is installed on the portable information terminal 101. In this example, the shared name 302 "ABC" already exists in the application management information 208. In addition, in this embodiment, a key that has been used to create the signature information 2023 of the application program corresponding to the detailed example 405 is the same as a key used to create the signature information 2015 of the application program corresponding to the previously registered detailed example 404. In this case, the application program is assigned "10000" that is stored as the UID 403 of the detailed example 404 having the same shared name "ABC." Consequently, the detailed example 405 having the application name 401 of "APP2," the shared name 402 of "ABC," and the UID 403 of "10000" is crated.

The detailed example 406 corresponds to a case where an application program whose application name 301 is "APP3" and whose shared name 302 is not set is installed on the portable information terminal 101. In this example, UID is newly assigned. In this example, "10010" is assigned. Consequently, the detailed example 406 having the application name 401 of "APP3," no shared name 402, and the UID 403 of "10010" is created.

It should be noted that an administrative application program is preferentially installed on the portable information terminal 101 irrespective of the presence or absence of privileges. It is impossible for malicious application programs to know a key that has been used to create signature information of the administrative application program.

Thus, when an administrative application program is preferentially installed on the portable information terminal 101, it is possible to avoid a circumstance in which the same ID is assigned to a malicious application program that is installed later.

### [Configuration of the Management Server 103]

Fig. 5 shows the functional block configuration of the management server 103. The management server 103 includes a management data transmitting unit 502 and a network connection unit 503. Each unit in Fig. 5 may be configured as hardware or implemented as a function on software.

In this embodiment, the management server 103 has mounted thereon devices that are typical of servers as needed, though not shown. For example, the management server 103 has mounted thereon a CPU, memory, HDD, an input instruction device (i.e., a keyboard and a mouse), and a display.

The network connection unit 503 is a device to connect to the portable information terminal 101 and the like, and corresponds to, for example, a NIC (network interface card).

The management data transmitting unit 502 transmits to the portable information terminal 101 (specifically, the management data receiving unit 2013 of the administrative non-privilege processing unit 2010) configuration changing data that includes, for example, configuration information on a VPN, though not shown. Although an example of the VPN settings is set is shown for describing this embodiment, the present invention is not limited thereto.

### [Procedures to Change the Configuration of the Portable Information Terminal 101]

Hereinafter, a specific example of a case where the configuration of the portable information terminal 101 is changed from the management server 103 will be described. Needless to say, the portable information terminal 101 authenticates an application, which is the source of transmission of information, with the administrative privilege processing unit 202, and only when the authentication is successful, the configuration of the portable information terminal 101 is changed on the basis of the configuration information transmitted from the management server 103.

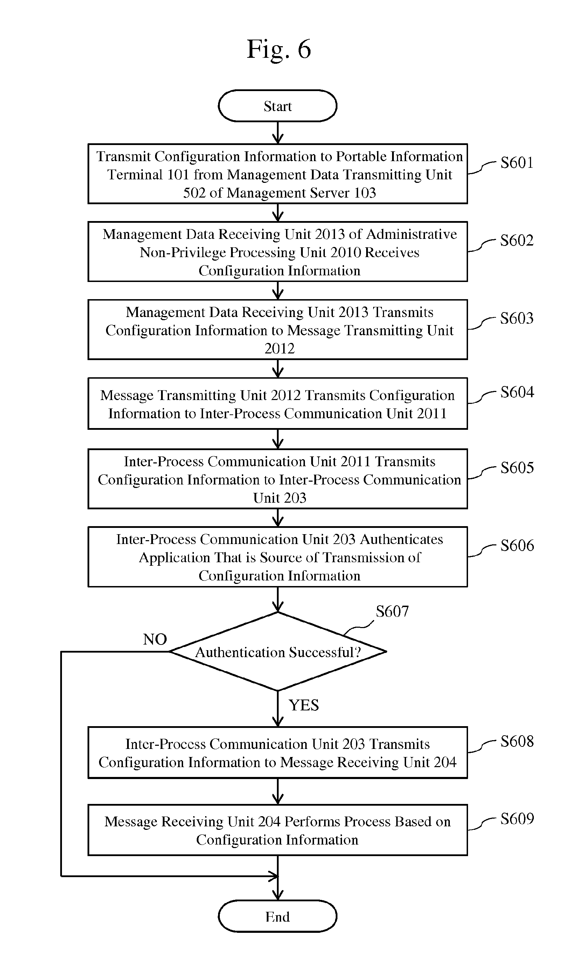

Fig. 6 is a flowchart showing the procedures to change the configuration in accordance with this embodiment.

First, the management data transmitting unit 502 of the management server 103 transmits configuration information to the portable information terminal 101 (S601). Examples of the configuration information include VPN connection settings of the portable information terminal 101. The configuration information is transmitted in the form of an application program, and is installed on the portable information terminal 101. Alternatively, the configuration information is given as an instruction to an application program that has been installed. When an application program is installed, the assigned UID and the application-specific information are stored as the application management information 208 in the storage unit 207.

Such configuration information is received by the administrative non-privilege processing unit 2010 of the portable information terminal 101. Specifically, the management data receiving unit 2013 of the administrative non-privilege processing unit 2010 receives the configuration information (S602). Reception of the configuration information herein is given as a request from an application program installed on the portable information terminal 101.

The management data receiving unit 2013 transmits the received configuration information to the message transmitting unit 2012 in the administrative non-privilege processing unit 2010 (S603).

The message transmitting unit 2012 transmits the received configuration information to the inter-process communication unit 2011 in the administrative non-privilege processing unit 2010 (S604).

The inter-process communication unit 2011 transmits the received configuration information to the inter-process communication unit 203 of the administrative privilege processing unit 202 (S605). As described above, the management server 103 is not able to directly access the administrative privilege processing unit 202, and executes communication via the administrative non-privilege processing unit 2010.

The inter-process communication unit 203 of the administrative privilege processing unit 202 authenticates the application program that is the source of transmission of the configuration information (S606). Specific process procedures executed during authentication are described below.

The inter-process communication unit 203 determines if the authentication has been successful (S607). If the authentication has failed, the inter-process communication unit 203 terminates the process. That is, the process of the message receiving unit 204 of the administrative privilege processing unit 202 is not granted.

Meanwhile, if the authentication has been successful, the inter-process communication unit 203 transmits the received configuration information to the message receiving unit 204 of the administrative privilege processing unit 202 (S608).

After that, the message receiving unit 204 executes a setting process on the basis of the received configuration information (S609). The content of the setting process executed in S609 is not limited to a particular setting process. In this embodiment, VPN connection setting is executed as described above.

### [Procedures to Authenticate Application]

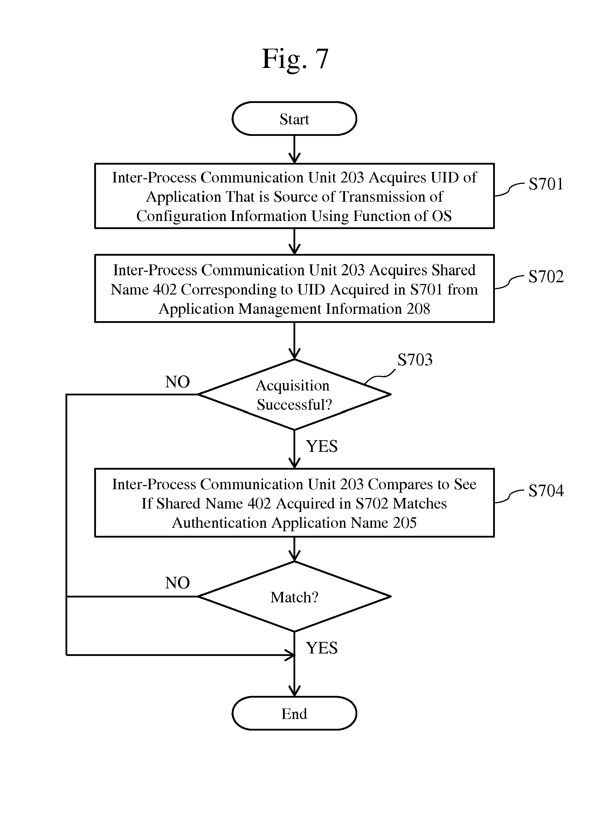

Fig. 7 shows a specific example of the authentication process described in step 606 of Fig. 6.

First, the inter-process communication unit 203 of the administrative privilege processing unit 202 acquires the UID of the application program, which is the source of transmission of the configuration information, using the function of the OS (S701).

Next, the inter-process communication unit 203 searches for the application management information 208 on the basis of the acquired UID, and acquires the shared name 402 in the row that contains the same UID (S702). It should be noted that even when a plurality of rows that contain the matched UID 403 are found in S702, the shared name 402 should be identical as long as the UID 403 is identical according to the rule for assigning the UID. Thus, the number of the shared names 402 acquired in S702 is limited to one.

Next, the inter-process communication unit 203 determines if the UID has been successfully acquired (S703). If a matched row is not found in S702, the inter-process communication unit 203 determines that the authentication has failed, and thus terminates the process. Meanwhile, if the shared name 402 has been successfully acquired in S702, the inter-process communication unit 203 compares to see if the shared name 402 acquired in S702 matches the authentication application name 205 (S704).

If the shared name 402 acquired in S702 does not match the authentication application name 205, the inter-process communication unit 203 determines that the authentication has failed, and terminates the process. Meanwhile, if the shared name 402 acquired in S702 matches the authentication application name 205, the inter-process communication unit 203 determines that the authentication has been successful, and terminates the process.

### [Conclusion of Embodiment 1]

As described above, if a shared name of an application program held as specific information is identical to information on a key that has been used to create the signature information, the portable information terminal 101 in accordance with this embodiment manages the application program to be installed by assigning the same UID thereto. In addition, the administrative privilege processing unit 202 with a privilege performs authentication on the basis of the UID and the shared name of the application program that is the source of transmission of the configuration information to the processing unit.

As described above, only an application program that matches a security policy can have signature information 2023 that has been created using the same key as a key used to create the signature information 2015 in the administrative non-privilege processing unit 2010 managed in the ROM area, and can use the same shared name as the authentication application name.

Further, the application management information 208 of the storage unit 207 is managed by the OS, and cannot be altered by application programs.

Thus, in authentication, procedures to acquire the UID from an application program requesting execution of the configuration information to the administrative privilege processing unit 202 with a privilege, and match the shared name corresponding to the UID, which has been registered in advance, against the authentication application name 205 are performed first, whereby it becomes possible to surely avoid a circumstance in which setting is executed by a malicious application program in the administrative privilege processing unit 202.

That is, even in the portable information terminal 101 for which UID cannot be designated from the outside, it is possible to stick to the security policy intended by the information manager.

### [Embodiment 2]

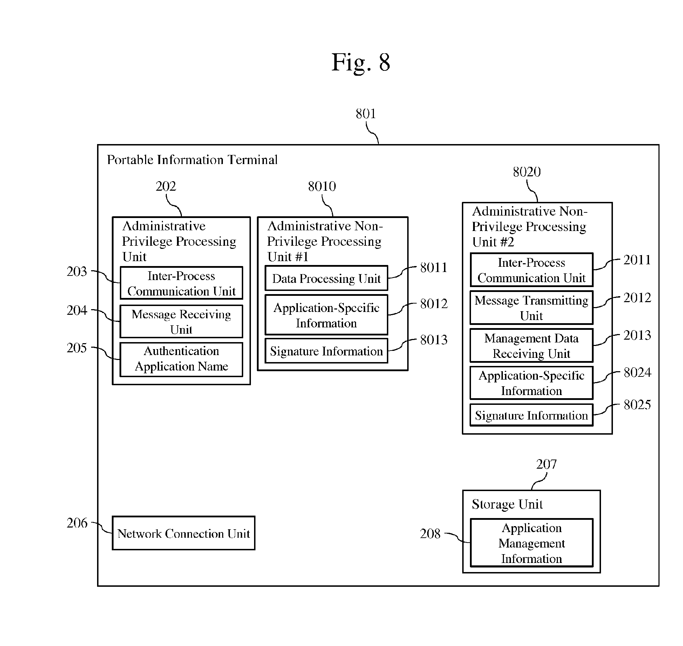

Next, a portable information terminal 801 in accordance with Embodiment 2 will be described. Fig. 8 shows the functional block configuration of the portable information terminal 801 in accordance with this embodiment. It should be noted that in Fig. 8, portions common to those in Fig. 2 are denoted by common reference numerals. The portable information terminal 801 includes an administrative privilege processing unit 202, a network connection unit 206, a first administrative non-privilege processing unit 8010, a second administrative non-privilege processing unit 8020, and a storage unit 207.

In this embodiment, the administrative privilege processing unit 202 and the first administrative non-privilege processing unit 8010 are also stored in the ROM area (not shown) of the portable information terminal 101 so that the content of the process cannot be freely changed by the user of the portable information terminal 101. It should be noted that the first administrative non-privilege processing unit 8010 does not include an inter-process communication unit, a message transmitting unit, or a management data receiving unit. That is, the first administrative non-privilege processing unit 8010 differs from that in Embodiment 1 in that it cannot transmit information to and from other applications.

In Fig. 8, the first administrative non-privilege processing unit 8010 includes a data processing unit 8011. The process performed by the data processing unit 8011 may be any process. The data processing unit 8011 may be not a substantial program but a dummy program. One of the reasons that the first administrative non-privilege processing unit 8010 without an inter-application communication function is stored in the ROM area as described above is that a shared name that matches the security policy has been registered as the application management information 208 in advance. This is to prevent a malicious application program from registering the same shared name as the authentication application name 205 later.

The second administrative non-privilege processing unit 8020 is an application program that can be installed by the user of the portable information terminal 101 or the information manager. That is, the second administrative non-privilege processing unit 8020 is installed in the RAM area of the portable information terminal 101. In this embodiment, it is assumed that the same key is used to create signature information 8013 of the first administrative non-privilege processing unit 8010 and signature information 8025 of the second administrative non-privilege processing unit 8020. In addition, the shared name 402 of application-specific information 8012 and that of the application-specific information 8024 contain an identical character string set therein. Besides, the second administrative non-privilege processing unit 8020 includes an inter-process communication unit 2011, a message transmitting unit 2012, and a management data receiving unit 2013.

Thus, in this embodiment, the transmission target of the configuration information from the management server 103 is the second administrative non-privilege processing unit 8020. Thus, this embodiment differs from Embodiment 1 in that the configuration information is transmitted to the administrative privilege processing unit 202 via the inter-process communication unit 2011, the message transmitting unit 2012, and the management data receiving unit 2013 described above. It should be noted that the detailed description of the authentication process and the like is omitted herein as it is the same as that in Embodiment 1.

When the second administrative non-privilege processing unit 8020 is installed in the RAM area as in this embodiment, it becomes possible to easily upgrade the version of the second administrative non-privilege processing unit 8020 and the like.

### [Embodiment 3]

Hereinafter, the portable information terminal 101 in accordance with Embodiment 3 will be described. In Embodiments 1 and 2, it is supposed that the configuration information is transmitted from the management server 103.

However, another implementation method may also be supposed where the user of the portable information terminal 101 operates a specific setting application (which corresponds to the administrative non-privilege processing unit 2010) to change the configuration of the portable information terminal 101.

In such a case, the management data receiving unit 2013 receives configuration information input by a user via a GUI (not shown) that is displayed on a display (not shown) by the administrative non-privilege processing unit 2010. Procedures to authenticate an application program after receiving the configuration information are similar to those in Embodiment 1.

With the use method of this embodiment, it is possible to use a use method in which only a specific application program prepared by a company in advance is allowed to change the configuration of the portable information terminal 101.

### [Other Embodiments]

Although the aforementioned embodiments have been described in detail to clearly illustrate the present invention, the present invention is not limited to a configuration that includes all of the components shown in the drawings. For example, various variations such as a combination of Embodiments 1 to 3 are possible. It is also possible to, for a part of a structure of each embodiment, add/remove/substitute another structure (not shown).

### Reference Signs List

- 101: Portable information terminal
- 102: Network
- 103: Management server
- 201: Portable information terminal
- 202: Administrative privilege processing unit
- 203: Inter-process communication unit
- 204: Message receiving unit
- 205: Authentication application name
- 206: Network connection unit
- 207: Storage unit
- 208: Application management information
- 2010: Administrative non-privilege processing unit
- 2011: Inter-process communication unit
- 2012: Message transmitting unit
- 2013: Management data receiving unit
- 2014: Application-specific information
- 2015: Signature information
- 2020: Non-privilege processing unit
- 2021: Data processing unit
- 2022: Application-specific information
- 2023: Signature information
- 301: Application name
- 302: Shared name
- 303: Detailed example
- 401: Application name
- 402: Shared name
- 403: UID
- 404: Detailed example
- 405: Detailed example
- 406: Detailed example
- 501: Management server
- 502: Management data transmitting unit
- 503: Network connection unit
- 801: Portable information terminal
- 8010: First administrative non-privilege processing unit
- 8011: Data processing unit
- 8012: Application-specific information
- 8013: Signature information
- 8020: Second administrative non-privilege processing unit
- 8024: Application-specific information
- 8025: Signature information

## Claims

1. A portable information terminal comprising:
a ROM area that stores (1) a first inter-process communication function unit that partially constitutes a first administrative application program having an administrative privilege and is capable of transmitting information to and from other application programs, (2) an authentication application name that partially constitutes the first administrative application and is used to authenticate an application program that is a source of transmission of information, (3) a second administrative application program having no administrative privilege, and (4) an application name, a shared name, and a signature of the second administrative application program; and
a RAM area that stores an application name, a shared name, and an ID of an installed application program and is managed via an OS (Operation System), wherein
the first inter-process communication function unit, after acquiring an ID of an application program that is a source of transmission of information, acquires a shared name corresponding to the acquired ID from the RAM area, and if the shared name has been successfully acquired, further compares the shared name with the authentication application name, and if the shared name matches the authentication application name, authenticates the application program that is the source of transmission.

2. The portable information terminal according to claim 1, wherein the ROM area further stores a second inter-process communication function unit that partially constitutes the second administrative application program having no administrative privilege and transmits information to and from other application programs.

3. The portable information terminal according to claim 1, wherein the RAM area further stores (1) a third administrative application program having no administrative privilege, (2) a third inter-process communication function unit that partially constitutes the third administrative application program and transmits information to and from other application programs, and (3) an application name, a shared name, and a signature of the third administrative application program.

4. The portable information terminal according to claim 1, wherein application programs that have signatures created using the same key and have the same shared name are assigned the same ID.

5. A program for causing a computer mounted on a portable information terminal, the portable information terminal including a ROM area that stores (1) a first inter-process communication function unit that partially constitutes a first administrative application program having an administrative privilege and is capable of transmitting information to and from other application programs, (2) an authentication application name that partially constitutes the first administrative application and is used to authenticate an application program that is a source of transmission of information, (3) a second administrative application program having no administrative privilege, and (4) an application name, a shared name, and a signature of the second administrative application program, and a RAM area that stores an application name, a shared name, and an ID of an installed application program and is managed via an OS (Operation System), to function as the first inter-process communication function unit to execute:
a process of acquiring an ID of an application program that is a source of transmission of information;
a process of acquiring a shared name corresponding to the acquired ID from the RAM area;
a process of, if the shared name has been successfully acquired, comparing the shared name with the authentication application name;
a process of, if the shared name matches the authentication application name, authenticating the application program that is the source of transmission; and
a process of, if the shared name has not been successfully acquired, terminating the process.
